# EUROPEAN PATENT SPECIFICATION

(11) **EP 2 914 771 B1**
(45) Date of publication and mention of the grant of the patent: **12.07.2023**
(21) Application number: 13850945.0
(22) Date of filing: 28.10.2013
(51) Int. Cl.: D21F 7/00, D21G 9/00, D21F 11/14, D21G 5/00

(54) **METHOD AND APPARATUS FOR MONITORING WEB**
NETZÜBERWACHUNGSVERFAHREN UND -VORRICHTUNG
PROCÉDÉ ET APPAREIL POUR SURVEILLER UNE BANDE

(30) Priority: 31.10.2012 FI 20126135
(43) Date of publication of application: 09.09.2015
(73) Proprietor: Valmet Automation Oy, 02150 Espoo (FI)
(72) Inventor: KALANIEMI, Hannes, FI-02150 Espoo (FI)
(74) Representative: Kolster Oy Ab
(86) International application number: PCT/FI2013/051018
(87) International publication number: WO 2014/068181

(56) References cited:
- US-A1- 2005 008 765
- US-A1- 2008 149 834
- US-A1- 2009 242 157
- US-B2- 6 849 851
- US-B2- 8 000 501
- US-B2- 8 000 501

## Description

### Field

The invention relates to a method and an apparatus to monitor deviations in a web.

### Background

Paper machines which manufacture crêpe paper may unintentionally cause local burns i.e. hotbeds of fire in the dry web. A reason for a burn to occur may be too effective drying and/or a spark from a doctor blade, for example. The hotbeds may at first be small but they may catch flames causing a real fire in the dry end of the paper machine which fortunately can be extinguished by an automatic sprinkler system. Even a much more dangerous situation develops if a smoldering burn remains smoldering causing the burn in the web to enlarge gradually. Because nothing is done to it, the smoldering spot may end up inside the layers of web wound around a reel spool. The reel spool may then be moved to a large store of reel spools. When the hotbed of fire has smoldered long enough inside the layers of tissue paper, it may catch explosive fire and burn the whole store.

Patent document US 20080149834 presents a hot spot and ember detection system and method. Patent document US 8000501 presents a method and a product for detecting abnormalities.

Because the dry end is so tightly packed with process parts and other equipment, there is no space to install an additional monitoring system without substantial changes in the machinery. Hence, there is a need for a practical monitoring solution of the web in the dry end of a tissue paper mill.

### Brief description

An object of the invention is to provide an improved solution for detecting temperatures capable of igniting the tissue paper.

According to an aspect of the present invention, there is provided a system of claim 1.

According to another aspect of the present invention, there is provided a method of claim 14.

The present solution provides advantages. A possibility of fire can be detected without structural complexity, and increase in volume and cost of the monitoring system.

### List of drawings

Embodiments of the present invention are described below, by way of example only, with reference to the accompanying drawings, in which
Figure 1 illustrates an example of a paper machine;
Figure 2 illustrates an example of monitoring tissue paper in the dry end of the paper machine;
Figure 3 illustrates an example of monitoring hot air blow to the tissue paper;
Figure 4 illustrates an example of monitoring production of tissue paper at the Yankee roll and the doctor blade;
Figure 5 illustrates an example of a representation having data about deviations and hot spots;
Figure 6 illustrates an example of the detecting means having a camera using visible light and a thermal detector using infrared light;
Figure 7 illustrates an example of detecting pixel matrix; and
Figure 8 illustrates an example of a flow chart of the method.

### Description of embodiments

The following embodiments are exemplary. Although the specification may refer to "an", "one", or "some" embodiment(s) in several locations, this does not necessarily mean that each such reference is to the same embodiment(s), or that the feature only applies to a single embodiment. Single features of different embodiments may also be combined to provide other embodiments.

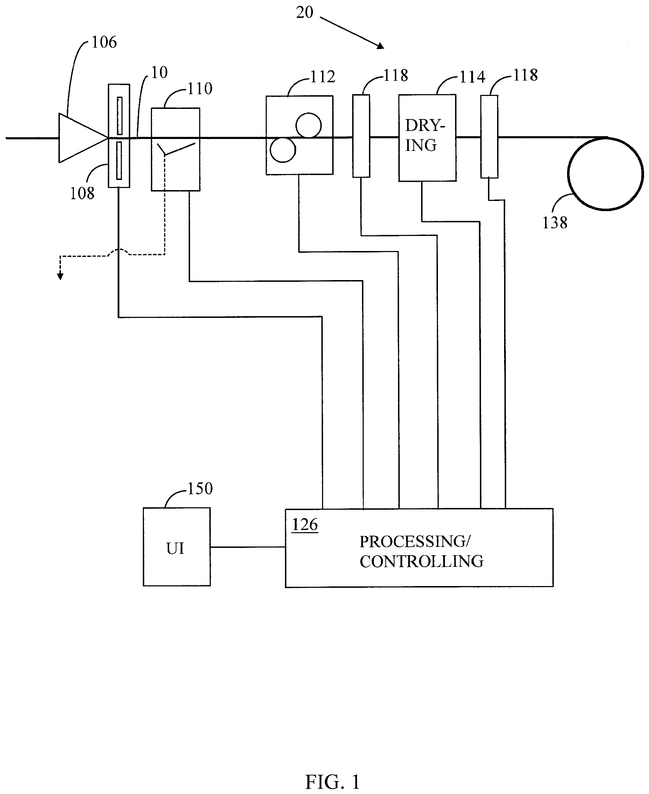

Figure 1 shows the principle structure of a paper machine starting from a head box 106, where pulp is fed through a slice 108 into the former 110, which may be a fourdrinier or a gap former. In the former 110, the web 10 is dewatered and ash, fines and fibres are removed into the short circulation. In the former 110, the pulp is fed as a web 10 onto the wire, and the web 10 is preliminarily dewatered and pressed in a press 112.

The web 10 is primarily dried in a dry end 20 of the paper machine where heat is introduced to the paper for making the rest of the water to evaporate. The dry end 20 may comprise a drying section 114, cutting, and reeling, for instance. The drying section 114 may also comprise a creping process. In the dry end 20, water content of the paper is lower than 10 per cents because of preliminary drying.

There is usually at least one detecting means 118, by which for instance the image may be captured and temperature of the web 10 and/or its environment may be obtained.

The paper machine may be a tissue paper machine, and it may feed the tissue paper in a reel 138.

In addition, it is obvious that the operation of a paper machine is known *per se* to a person skilled in the art, wherefore it is not described in more detail in this context.

Figure 1 also shows a control system for the paper machine. A controller 126 may control all the processes of the paper machine including creping process and the drying process 114. The controller 126 utilizes the detection means 118 for monitoring the tissue paper and/or at least one section of the paper machine. The controller 126 may also measure the web 10 properties by other detecting means (not shown). A user interface 150 may be coupled with the controller 126.

The controller 126 may be considered as a control arrangement based on automatic data processing of the paper machine, or as a part thereof. The controller 126 may receive digital signals or convert the received analog signals to digital signals. The controller 126 may comprise at least one microprocessor and memory and process the signal according to a suitable computer program. The controller 126 may be based on a PID (Proportional-Integral-Derivative), MPC (Model Predictive Control) or GPC (General Predictive Control) control, for example.

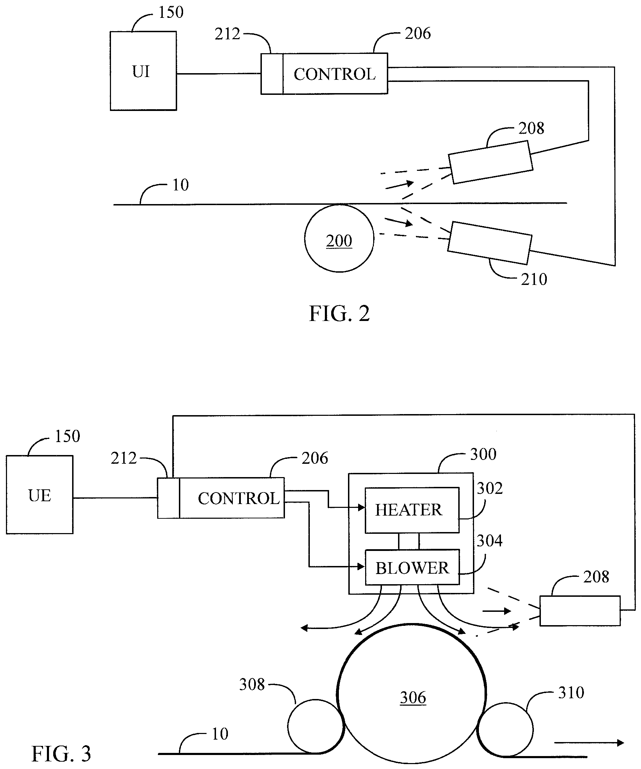

Figure 2 presents an embodiment of a system for monitoring production of the tissue paper in the dry end of the paper machine. The web 10 of the tissue paper may pass over a roll 200. The surface of the roll 200 may become hot because of a mechanical failure. If the surface of the roll 200 is too hot, web 10 may burn and start smoldering or catch fire. The bearing of the roll 200, for example, may have friction which causes high temperature and that may cause the roll 200 to send sparks for example. The temperature where a dry paper as a web 10 catches fire is around 230°C to 270°C, for example.

The system also comprises two detecting means 208, 210 which are shown in Figure 1 with reference number 118. One of them may be on one side of the web 10 and another may be on the other side of the web 10, or they may reside on the same side of the web, for instance. In general, the system may comprise one or more detecting means 208, 210. The at least one detecting means 208, 210 captures images of the moving web 10 in visible light for providing a processing means 212 with image data. The visible light may cover fully or partly a wavelength range about 400 nm to 750 nm, for example. The at least one detecting means 208, 210 form also thermal data in response to temperatures capable of igniting the moving web 10 of tissue paper and feeds it to the processing means 212. The at least one detecting means 208, 210 may form the thermal data in response to infrared light. The thermal data may also be based on other optical radiation. In addition to infrared light thermal data may be based on visible light and/or ultraviolet light, for example. The detected infrared light may cover fully or partly a range about 0.70 µm to 1000 µm. The infrared range may also be narrower such as from about 0.70 µm to 1.1 µm. Additionally or alternatively, the at least one detecting means 208, 210 may form the thermal data in response to ultraviolet light. The detected ultraviolet light may cover fully or partly a range about 10 nm to 400 nm.

The processing means 212, which may be included in the controller 206, analyzes the image of the visible light and thermal data from the detecting means 208, 210 for detecting visibly observable deviations in the web 10, and temperature deviations capable of causing the web 10 to catch fire for notifying a user about the temperature deviations. The notifying may be performed by a visible signal and/or by an audio signal. The notifying may be graphical or alphanumeric information on a screen.

The detecting means 208, 210 may additionally monitor at least one section of the paper machine which in this example may be the roll 200. The detecting means 208, 210 may also monitor a bearing of the roll 200 since if the bearings become broken their temperature may rise and/or they may output sparks which both may be ignition sources.

The web of tissue paper may be monitored for deviations and their positions. A deviation may be a defect or a break, for example. A defect may be a hole, impurity, a streak or the like in the web, for example. There are problems related to the visible monitoring system. The cameras using only visible light and particularly flashes of visible light may have difficulties to detect hot particles or spots. In detection, a flash of visible light typically overpowers glow of a spark and the spark may remain undetected. That is why it is useful to detect infrared and/or ultraviolet light alone or in addition to visible light since infrared and/or ultraviolet light may be used to detect areas and particles having high temperatures capable of causing a fire. Because a hot particle radiates infrared and ultraviolet light, its detection is easier without a flash of light. The reflection of a flash lowers contrast between a hot particle and its environment and makes it difficult to distinguish between a particle radiating because of its high temperature and a particle only reflecting the flash.

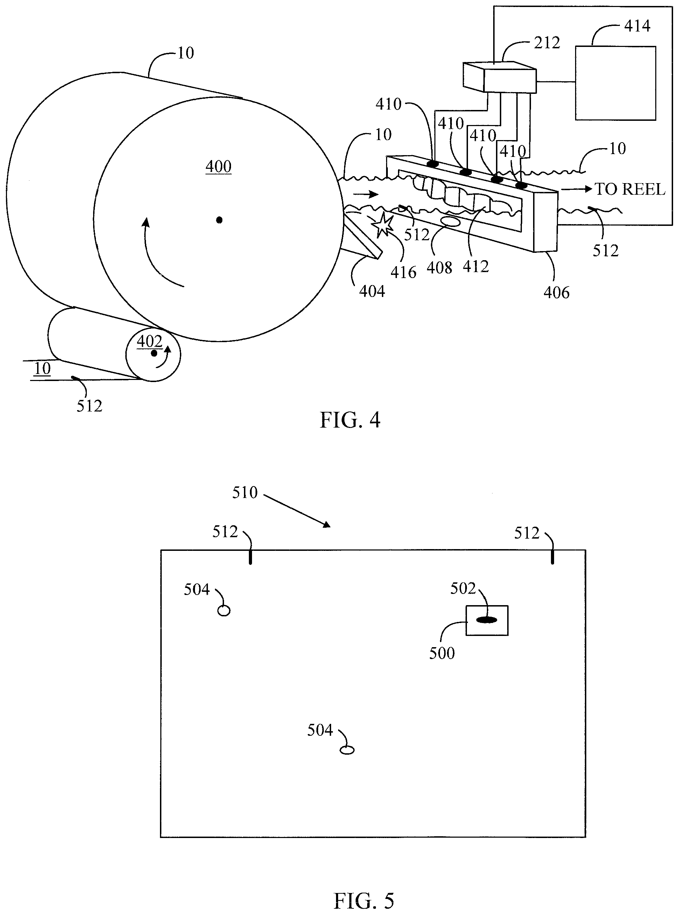

Figure 3 illustrates another embodiment of a system for monitoring production of tissue paper in the dry end 20 of the paper machine. In this example the web 10 is heated by a hot air blow from a drier 300. The drier 300 may comprise a heater 302 and a blower 304. The drier 300 may be a hood drier although the hood is not presented in Figure 3 for simplicity. The web 10 may be on cylinder 306 when heated although that is not necessary. The web 10 may be rolled on and off the cylinder 306 with auxiliary rolls 308, 310 (Figure 4 shows an alternative for the roll 310). The temperature of the air blown to the web 10 may be hundreds of degrees of Celcius, such as around 300°C to 500°C, for example. in some cases, the temperature of the blown air may be as high as 700°C. This drying process may be called forced-air heating. The drying power may be increased by increasing temperature of the hot air in a heater 302. The drying power may be decreased by decreasing temperature of the hot air in a heater 302. Additionally or alternatively, the hot air flow [m³/s] may be increased or decreased by a blower 304 to change the drying power. If too hot air is used, paper may become rough and/or wrinkled and/or it may burn and start smoldering or catch fire.

Like in Figure 2, the system comprises at least one detecting means 208 also in this embodiment, and the detecting means 208 may be placed in a desired position with respect to the drier 300. In this example, there is only one detecting means 208 which captures images of the moving web 10 in visible light for providing a processing means 212 with image data. The detecting means 208 forms also thermal data in response to high temperatures of the moving web 10 and feeds it to the processing means 212.

The processing means 212 within or outside the controller 206 analyzes the image and thermal data from the detecting means 208 for detecting visibly observable deviations in the web 10, and temperature deviations capable of causing the web 10 to catch fire. The detecting means 208 may additionally monitor at least one section of the paper machine which in this example may be the drier 300 for detecting dangerously high temperatures and for locating them in an image formed with visible light.

Figure 4 illustrates the system in conjunction with a Yankee dryer 400. The drying and creping process may further comprise an auxiliary roll 402 for pressing the web 10 against the Yankee roll 400 and a doctor blade 404. The Yankee drier is a heated roll which dries the web 10 by the heat. The Yankee roll 400 may be heated with hot steam in a similar manner explained in conjunction with Figure 2. The doctor blade 404 detaches the hot and dry web 10 from the surface of the Yankee roll 400 for causing the web 10 to become crinkled or creped. For making soft tissue paper, creping chemicals with or without softening agents may be applied to the web 10 before or on the Yankee roll 400. The creping chemicals, in addition to facilitating the crinkling of the paper, may lubricate the contact surfaces for reducing temperature and wear of the doctor blade 404 and the Yankee roll 400 during scraping off the web 10. A drier 300 shown in Figure 3 may be applied for the Yankee roll 400, too.

The monitoring system may include a supporting frame structure 406 extending across the web 10 for supporting the detecting means 208 at a distance from the creped web 10. The supporting structure 406 may also be applied in various embodiments such as in Figures 1 to 3.

In an embodiment, the detecting means 208 may comprise at least one thermal detector 408 which may monitor the doctor blade 404 for detecting temperature deviations capable of causing the web 10 to catch fire. Additionally or alternatively, the thermal detector 408 may monitor the Yankee dryer 400 for detecting temperature deviations capable of causing the web 10 to catch fire. Still further, the thermal detector 408 may monitor the web 10 in the environment of the doctor blade 404. As shown in Figure 4, a spark 416 may come off from contact surface between the doctor blade 404 and the Yankee roll 400. The spark 416 may land on the web 10. Since the spark 416 has a high temperature, it may be detected.

In an embodiment, at least one of the cameras 410 using visible light may include a thermal detector 408 for monitoring thermal deviations. The one or more cameras 410 using visible light may comprise CCD (Charge-Coupled Device) cameras or CMOS (Complementary Metal-Oxide Semiconductor) cameras. The at least one thermal detector 408 using infrared light may be based on semiconductor technology. The thermal detector 408 may comprise at least one detecting pixel similar to pixels in CCD (Charge-Coupled Device) or CMOS (Complementary Metal-Oxide Semiconductor) matrix. An ultraviolet detector may be a solid state detector having detecting elements made of silicon carbide or the like, for example.

In an embodiment, the detecting means 208 may comprise a camera the pixels of which may detect visible light.

In an embodiment, the detecting means 208 may comprise a camera the pixels of which may detect ultraviolet light.

In an embodiment, the detecting means 208 may comprise a camera the pixels of which may detect infrared light.

In an embodiment, the detecting means 208 may comprise a camera the pixels of which may detect visible light and at least one of the following: infrared light and ultraviolet light.

The detecting means 208 may also comprise or have an operational connection to a flash light source which outputs flashes of light. The flashes of light may be flashes of visible light. The detecting means 208 may capture images of the web 10 on the basis of illumination by flashes of light which reflects from the web 10 such that one or more flashes are used for one image. Instead of visible flashes, ultraviolet light flashes and/or infrared light flashes may be used. Between the flashes of light, the detecting means 208 may capture an image in the direction of the web 10 or otherwise form thermal data. Because no flash is illuminating during such a moment, any spark that may be in view of the detecting means 208, will be distinguished much more easily than during the flash. Additionally, the detecting means 208 may detect the potential spark because the infrared and/or ultraviolet light generated by the burning hot object(s) are/is not overpowered by the flash. That is, the luminous objects such as sparks and smoldering spots may be detected between flashes of light, and non-luminous objects such as the web 10 and its visibly observable deviations may be detected with the flashes of light. Additionally or alternatively, the detecting means 208 may capture corresponding images and/or thermal data of a section of a paper machine. In an embodiment, the images may be captured such i.e. so frequently the images cover the whole surface of the moving web 10.

In an embodiment, beside at least one of the cameras 410 using visible light there may be a thermal detector 408 in the detection means 118 for monitoring thermal deviations.

In an embodiment, the thermal detector 408 may monitor at least one component of the paper machine expected to be a source of ignition capable of causing the tissue paper to catch fire.

In an embodiment, the thermal detector 408 may monitor the tissue paper for detecting burn thereon or sparks before, during or after their landing on the web.

The supporting structure 406 may support at least one camera 410 which captures images of the creped web 10 using visible light. In this example, the camera 410 capturing images in visible light and the thermal detector 408 are directed in different directions and make detection in separate parts of the process. The imaged area is illustrated in Figure 4 by a reference number 412. The at least one camera 410 using visible light may capture images of the section of the web 10 which were in the environment of the doctor blade 404 when the spark 416 appeared. Data based on the visible images and thermal detections may be shown to personnel using a screen 414 of the user interface 150. The data may be shown in a graphic and/or alphanumerical form. Instead of the screen 414, other form of the user interface 150 may be used.

By utilizing an existing user interface of the monitoring system of the paper mill there is no need for a new user interface associated with the fire detection.

In general, the processing means 212 may control process of image capturing and/or image processing if a temperature capable of causing the tissue paper to catch fire is detected. That is, a detection of an object or a spot whose temperature exceeds a predefined limit by the thermal detector 408, acts as a trigger to the operation associated with the image processing in visible light. Then an image may be captured from an area of the web where a temperature exceeding the predefined limit is detected. However, it may also be the other way round. The processing means 212 may control the process of forming thermal data of the area of the sheet where an image with a deviation is detected. Because an image of a deviation cannot alone tell whether the deviation is a hot bed or not. In general, using both the thermal data and the image data ensures that real hot beds may be discovered.

An image or images with the visible light, in turn, enables the personnel to see the section of the web in the image and if necessary also check the real web in the reel 138 before the hot bed causes a real danger. The tissue paper in the reel 138 may be re-reeled to find the smoldering spot, for example.

Since the new monitoring system can detect both structural deviations of the web 10 and thermal deviations of the web 10 the cost of the monitoring system can be kept relatively low which is an advantage over the prior art monitoring systems.

In an embodiment, the processing means 212 may capture an image of a section of the web 10 in response to the detection of a temperature deviation capable of causing the tissue paper to catch fire. The processing means 212 may provide a signal for capturing an image of said section associated with the detection of the too high temperature. If the thermal detector 408 and the camera 410 monitor the same area of the web 10, the thermal detector 408 may trigger the camera 408 to capture an image immediately when a detection of too hot a temperature is detected. If the thermal detector 408 and the camera 410 detect separate areas, the capture of an image by the camera 410 may be synchronized with the movement of the web 10.

In an embodiment, the processing means 212 may identify an image of a section of the web 10 in response to a detection of a temperature deviation capable of causing the tissue paper to catch fire in said section. Each camera 410 may capture images regularly with so high rate that the whole surface of the web 10 will be covered by the images. When the processing means 212 detects too high a temperature in the section of the web, the processing means 212 may identify an image of the section captured by the at least one camera 410. Data associated with the image and its identification may notify the user that the section of the web 10 in the image contains a potential danger for a fire and the user may take necessary measures.

In an embodiment, the identification may be based on timing of the image. The moment of time at which an image is taken and the predetermined movement of the web determine a unique identification for each image with respect to the detection area in the web. Correspondingly, the moment of time at which a thermal data is detected and the predetermined movement of the web determine a unique identification for each detection with respect to the detection area in the web. That is why the image data and the thermal data can be received from the same place of the web. That is also why the both data can be compared to each other and can be combined in the same representation.

In an embodiment, the identification is based on a mark may be visible to a user. The mark may comprise a text "Warning" or the like. Also different colors on an image on the screen may be used to draw attention of the user, for example. Additionally or alternatively, an audio signal may be output to warn the user of a potential danger of fire.

In an embodiment, the processing means 212 may analyze and combine image data and thermal data for forming a common representation of deviations and temperature deviations capable of causing the tissue paper to catch fire for a user of the paper machine. The common representation may be a defect map of the web 10, for example. Figure 5 presents an example of the representation 510 which may be an image with a hot bed mark 500. Since the image processing of the processing means 212 may distinguish deviations caused by too high temperature deviations 502 from other structural deviations 504, the deviation 502 caused by too high temperature may be marked with the hot bed mark 500 in the image data. Hence, the processing means 212 may indicate, in the representation 510, locations of both visible deviations 504 and temperature deviations 502 capable of causing the tissue paper to catch fire.

The processing means 212 may indicate, in the representation 510, that a certain deviation 502 is caused by a detected high temperature capable of causing the tissue paper to catch fire in the case they have is a common location in the tissue paper. In such an embodiment, each thermal detector 408 may comprise a camera with a matrix of detecting pixels for capturing an image in infrared or in ultraviolet light.

In an embodiment, the processing means 212 may synchronize the detections with respect to the movement of the web 10 on the basis of synchronization marks 512 in the web 10. The synchronization marks 512 may be detectable either by visibly or thermally or both visibly and thermally. The synchronization marks 512 may be detectable in visible light and ultraviolet and/or infrared light. The synchronization on the basis of synchronization marks 512 is possible when the thermal detector 408 comprises a camera capable of capturing images in infrared or ultraviolet light. Synchronization and synchronization marks 512 are known *per se*. For example, the number of synchronization marks can be counted and when a detection of too high a temperature is made, its relation to a location on the web 10 can be determined on the basis of at least one value of a synchronization mark 512 appearing in its vicinity. The synchronization marks 512 may also be have ordinal numbering for directly revealing a location where a thermal deviation is detected.

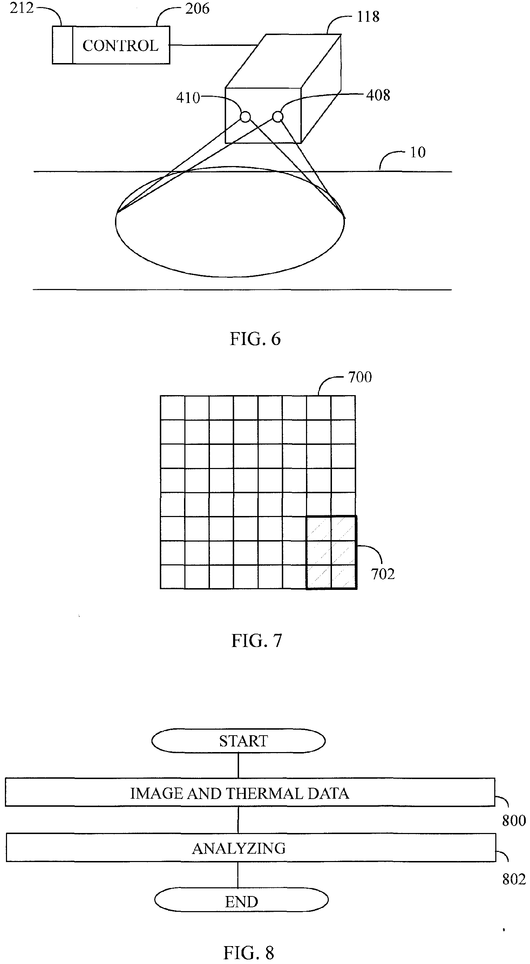

In an embodiment shown in Figure 6, the detecting means 118 (208, 210) may comprise at least one camera 410 capturing images in visible light and at least one thermal detector 408. In an embodiment, each thermal detector 408 may be installed inside of the housing of the one or more cameras 410 capturing images in visible light. In this example, the detected areas on the web 10 in the visible light and in the infrared or ultraviolet light are drawn to be the same. In general, the detecting areas are not necessarily the same.

In an embodiment, the at least one thermal detector 408 may be included in at least one break camera configured to detect breaks of the web.

In an embodiment shown in Figure 7, each of the one or more cameras 410 capturing images in visible which also comprise the at least one thermal detector 408 have a detecting pixel matrix 700. At least one pixel 702 of the detecting pixel matrix 700 may detect objects or spots capable of causing the tissue paper to catch fire.

In an embodiment, the detecting arrangement 208, 210 comprises at least one camera responsive in the visible light from at least one of the following: the tissue paper, at least one section of the paper machine.

In an embodiment, the detecting arrangement 208, 210 comprises at least one thermal detector 408 responsive to temperature deviations capable of causing fire in the tissue paper from at least one of the following: the tissue paper, at least one section of the paper machine. The thermal detector 408 may comprise a camera for capturing images in infrared or ultraviolet light.

Figure 8 presents a flow chart of the method. In step 800, forming, by at least one detecting means, image data of the moving tissue paper in visible light and thermal data in response to temperature deviations capable of causing the tissue paper to catch fire from at least one of the following: the tissue paper, at least one section of the paper machine. In step 802, analyzing, by a processing means, the image and thermal data from the detecting means for detecting visibly observable deviations in the tissue paper and the temperature deviations capable of causing the tissue paper to catch fire for notifying a user about the temperature deviations.

The controller 206 and the processing means 212 may be separate parts from the main controller 126 each comprising a state machine such as a computer and a suitable computer program or they may be parts of the main controller 126 which may also be realized as at least one computer with at least one computer program. In an embodiment, the device implementing aspects of the invention may be realized as software, or computer program or programs in a processing system, a server or a set of computers of a web service system connected to the Internet.

The computer programs may be in source code form, object code form, or in some intermediate form, and it may be stored in some sort of carrier, which may be any entity or device capable of carrying the program. Such carriers include a record medium, computer memory, read-only memory, and software distribution package, for example. Depending on the processing power needed, the computer program may be executed in a single electronic digital controller or it may be distributed amongst a number of controllers.

It will be obvious to a person skilled in the art that, as technology advances, the inventive concept can be implemented in various ways. The invention and its embodiments are not limited to the examples described above but may vary within the scope of the claims.

## Claims

1. A system for monitoring production of tissue paper (10) in a dry end (20) of a paper machine, the system comprising
at least one detecting means (118, 208, 210) configured to form image data in visible light from a section of the moving tissue paper (10) and to form thermal data in response to temperatures capable of igniting the tissue paper (10) from the tissue paper (10) and/or at least one section of the paper machine; and
a processing means (126, 212) configured to analyze said image data and thermal data from the detecting means (118, 208, 210) for detecting visibly observable structural deviations (504) in the tissue paper (10) and temperature deviations (502) capable of igniting the tissue paper (10) from the tissue paper and/or at least one section of the paper machine; and
the processing means (126, 212) is configured to identify an image data in response to a detection of said temperature deviations (502) capable of igniting the tissue paper or thermal data of a section of the paper tissue (10) or at least one section of the paper machine in response to an image with a structural deviation (504) being detected on the basis of a moment of time of the image is captured and a moment of time at which a thermal data is detected;
the processing means (126, 212) being configured to compare the image data and the thermal data and notify a user about the temperature deviations (502) capable of igniting the tissue paper on the basis of the comparison of the thermal and image data and its identification.

2. The system of claim 1, wherein the at least one detecting means (118, 208, 210) is configured to form image data in visible light from the moving tissue paper (10) on the basis of illumination by one or more flashes of light, and thermal data without the illumination of the flashes between the flashes in response to temperatures capable of igniting the tissue paper (10) from at least one of the following: the tissue paper (10), at least one section of the paper machine.

3. The system of claim 1, wherein the processing means (126, 212) is configured to control a process associated with image capturing in visible light or processing thereof if a temperature deviation (502) capable of igniting the tissue paper (10) is detected.

4. The system of claim 3, wherein the processing means (126, 212) is configured to control the capture of an image of a section of the tissue paper (10) in visible light in response to a detection of the temperature deviation (502) capable of igniting the tissue paper (10) associated with said section.

5. The system of claim 3, wherein the processing means (126, 212) is configured to identify an image of a section of the tissue paper (10) captured in visible light in response to a detection of the temperature deviation (502) capable of igniting the tissue paper (10) associated with said section.

6. The system of claim 1, wherein the processing means (126, 212) is configured to analyze and combine image data and thermal data for forming a common representation of visible deviations (504) and temperature deviations (502) capable of igniting the tissue paper (10) for a user of the paper machine.

7. The system of claim 6, wherein the processing means (126, 212) is configured to indicate, in the representation (510), locations of both visible deviations (504) and temperature deviations (502) capable of igniting the tissue paper (10).

8. The system of claim 6, wherein the processing means (126, 212) is configured to indicate, in the representation (510), that a certain deviation is caused by a certain detected temperature deviation (502) capable of igniting the tissue paper (10) in the case they have a common location in the tissue paper (10).

9. The system of any preceding claim, wherein the processing means (126, 212) is configured to synchronize the detections with respect to the movement of the tissue paper (10) on the basis of synchronization marks (512) in the tissue paper (10), the synchronization marks (512) being detectable in at least one of visible detection and thermal detection.

10. The system of claim 1, wherein the detecting means (118, 208, 210) comprises at least one thermal detector (408) and one or more cameras (410), the at least one thermal detector (408) being configured to receive radiation of an infrared range and the one or more cameras (410) being configured to capture images in the visible light.

11. The system of any preceding claim, wherein the processing means (126, 212) comprises
at least one processor; and
at least one memory including computer program code,
the at least one memory with the at least one processor and the computer program code configured to cause the processing means (126, 212) to analyze the image and thermal data from the detecting means (118, 208, 210) for detecting visibly observable deviations (504) in the tissue paper (10), and temperatures deviations (502) capable of igniting the tissue paper (10).

12. The system of claim 11, wherein the computer program code being configured to cause the processing means (126, 212) to control process of image capturing in visible light if a temperature capable of igniting the tissue paper (10) is detected.

13. The system of claim 11, wherein the computer program code being configured to cause the at least one detecting means (118, 208, 210) to form image data of the tissue paper (10) in visible light and thermal data from the moving tissue paper (10) and/or at least one section of the paper machine.

14. A method for monitoring production of tissue paper (10) in a dry end (20) of a paper machine, comprising
forming, by at least one detecting means (118, 208, 210), image data of a section of the moving tissue paper (10) in visible light and thermal data in response to temperatures capable of igniting the tissue paper (10) from the tissue paper (10) and/or at least one section of the paper machine; and
analyzing, by a processing means (126, 212), said image data and thermal data from the detecting means (118, 208, 210) for detecting visibly observable structural deviations (504) in the tissue paper (10) and the temperature deviations (502) capable of igniting the tissue paper (10) from the tissue paper and/or at least one section of the paper machine;
identifying, by the processing means (126, 212), an image data in response to a detection of said temperature deviation (502) capable of igniting the tissue paper or thermal data of a section of the paper tissue (10) or at least one section of the paper machine where an image with a structural deviation (504) being detected on the basis of a moment of time of the image is captured and a moment of time at which a thermal data is detected; and
comparing the image data and the thermal data, and notifying, by the processing means (126, 212), a user about the temperature deviations (502) capable of igniting the tissue paper on the basis of the comparison of the thermal and image data and its identification.

15. A computer program distribution medium readable by a computer and encoding a computer program of instructions for executing a computer process carrying out the steps according to claim 14.

## Patentansprüche

1. System zum Überwachen einer Produktion von Seidenpapier (10) an einem trockenen Ende (20) einer Papiermaschine, wobei das System Folgendes umfasst
mindestens ein Detektionsmittel (118, 208, 210), das dazu ausgelegt ist, bei sichtbarem Licht von einem Bereich des sich bewegenden Seidenpapiers (10) Bilddaten zu bilden und in Reaktion auf Temperaturen, die in der Lage sind, das Seidenpapier (10) zu entzünden, Wärmedaten vom Seidenpapier (10) und/oder von mindestens einem Bereich der Papiermaschine zu bilden; und
ein Verarbeitungsmittel (126, 212), das dazu ausgelegt ist, zum Detektieren von sichtbar beobachtbaren Strukturabweichungen (504) im Seidenpapier (10) und Temperaturabweichungen (502), die in der Lage sind, das Seidenpapier (10) zu entzünden, am Seidenpapier und/oder in mindestens einem Bereich der Papiermaschine die Bilddaten und die Wärmedaten vom Detektionsmittel (118, 208, 210) zu analysieren; und
das Verarbeitungsmittel (126, 212) ist dazu ausgelegt, in Reaktion auf eine Detektion der Temperaturabweichungen (502), die in der Lage sind, das Seidenpapier zu entzünden, Bilddaten oder in Reaktion darauf, dass ein Bild mit einer Strukturabweichung (504) auf Basis eines Zeitmoments, in dem das Bild erfasst wird, und eines Zeitmoments, in dem die Wärmedaten detektiert werden, Wärmedaten eines Bereichs des Seidenpapiers (10) oder mindestens eines Bereichs der Papiermaschine zu identifizieren;
wobei das Verarbeitungsmittel (126, 212) dazu ausgelegt ist, die Bilddaten und die Wärmedaten zu vergleichen und auf Basis des Vergleichs der Wärme- und der Bilddaten und von deren Identifikation einen Benutzer über die Temperaturabweichungen (502), die in der Lage sind, das Seidenpapier zu entzünden, zu benachrichtigen.

2. System nach Anspruch 1, wobei das mindestens eine Detektionsmittel (118, 208, 210) dazu ausgelegt ist, von mindestens einem von Folgendem: dem Seidenpapier (10), mindestens einem Bereich der Papiermaschine Bilddaten bei sichtbarem Licht von dem sich bewegenden Seidenpapier (10) auf Basis einer Beleuchtung durch einen oder mehrere Lichtblitze sowie Wärmedaten ohne die Beleuchtung der Lichtblitze zwischen den Blitzen in Reaktion auf Temperaturen, die in der Lage sind, das Seidenpapier (10) zu entzünden, zu bilden.

3. System nach Anspruch 1, wobei das Verarbeitungsmittel (126, 212) dazu ausgelegt ist, einen Prozess zu steuern, der mit einer Bilderfassung bei sichtbarem Licht oder einer Verarbeitung davon verknüpft ist, wenn eine Temperaturabweichung (502) detektiert wird, die in der Lage ist, das Seidenpapier (10) zu entzünden.

4. System nach Anspruch 3, wobei das Verarbeitungsmittel (126, 212) dazu ausgelegt ist, in Reaktion auf eine Detektion der Temperaturabweichung (502), die in der Lage ist, das mit einem Bereich verknüpfte Seidenpapier (10) zu entzünden, die Erfassung eines Bildes des Bereichs des Seidenpapiers (10) bei sichtbarem Licht zu steuern.

5. System nach Anspruch 3, wobei das Verarbeitungsmittel (126, 212) dazu ausgelegt ist, in Reaktion auf eine Detektion der Temperaturabweichung (502), die in der Lage ist, das mit einem Bereich verknüpfte Seidenpapier (10) zu entzünden, ein Bild des Bereichs des bei sichtbarem Licht erfassten Seidenpapiers (10) zu identifizieren.

6. System nach Anspruch 1, wobei das Verarbeitungsmittel (126, 212) dazu ausgelegt ist, Bilddaten und Wärmedaten zum Bilden einer gemeinsamen Darstellung von sichtbaren Abweichungen (504) und von Temperaturabweichungen (502), die in der Lage sind, das Seidenpapier (10) zu entzünden, für einen Benutzer der Papiermaschine zu analysieren und zu kombinieren.

7. System nach Anspruch 6, wobei das Verarbeitungsmittel (126, 212) dazu ausgelegt ist, Orte sowohl von sichtbaren Abweichungen (504) als auch von Temperaturabweichungen (502), die in der Lage sind, das Seidenpapier (10) zu entzünden, in der Darstellung (510) anzuzeigen.

8. System nach Anspruch 6, wobei das Verarbeitungsmittel (126, 212) dazu ausgelegt ist, in der Darstellung (510) anzuzeigen, dass eine gewisse Abweichung durch eine gewisse detektierte Temperaturabweichung (502), die in der Lage ist, das Seidenpapier (10) zu entzünden, verursacht wurde, sofern sie einen gemeinsamen Ort im Seidenpapier (10) aufweisen.

9. System nach einem der vorhergehenden Ansprüche, wobei das Verarbeitungsmittel (126, 212) dazu ausgelegt ist, die Detektionen mit Bezug auf die Bewegung des Seidenpapiers (10) auf Basis von Synchronisationsmarken (512) im Seidenpapier (10) zu synchronisieren, wobei die Synchronisationsmarken (512) bei mindestens einem von einer sichtbaren Detektion und einer Wärmedetektion detektierbar sind.

10. System nach Anspruch 1, wobei das Detektionsmittel (118, 208, 210) mindestens einen Wärmedetektor (408) und eine oder mehrere Kameras (410) umfasst, wobei der mindestens eine Wärmedetektor (408) dazu ausgelegt ist, eine Strahlung eines Infrarotbereichs zu empfangen, und wobei die eine oder die mehreren Kameras (410) dazu ausgelegt sind, Bilder bei sichtbarem Licht zu erfassen.

11. System nach einem der vorhergehenden Ansprüche, wobei das Verarbeitungsmittel (126, 212) Folgendes umfasst
mindestens einen Prozessor; und
mindestens einen Speicher, der Computerprogrammcode beinhaltet,
wobei der mindestens eine Speicher mit dem mindestens einen Prozessor und dem Computerprogrammcode dazu ausgelegt ist, das Verarbeitungsmittel (126, 212) zu veranlassen, zum Detektieren von sichtbar beobachtbaren Abweichungen (504) im Seidenpapier (10) und Temperaturabweichungen (502), die in der Lage sind, das Seidenpapier (10) zu entzünden, die Bild- und die Wärmedaten vom Detektionsmittel (118, 208, 210) zu analysieren.

12. System nach Anspruch 11, wobei der Computerprogrammcode dazu ausgelegt ist, das Verarbeitungsmittel (126, 212) zu veranlassen, einen Prozess der Bilderfassung bei sichtbarem Licht zu steuern, wenn eine Temperatur detektiert wird, die in der Lage ist, das Seidenpapier (10) zu entzünden.

13. System nach Anspruch 11, wobei der Computerprogrammcode dazu ausgelegt ist, das mindestens eine Detektionsmittel (118, 208, 210) zu veranlassen, bei sichtbarem Licht Bilddaten des Seidenpapiers (10) sowie Wärmedaten von dem sich bewegenden Seidenpapier (10) und/oder von mindestens einem Bereich der Papiermaschine zu bilden.

14. Verfahren zum Überwachen einer Produktion von Seidenpapier (10) an einem trockenen Ende (20) einer Papiermaschine, das Folgendes umfasst
Bilden von Bilddaten von einem Bereich des sich bewegenden Seidenpapiers (10) bei sichtbarem Licht und, in Reaktion auf Temperaturen, die in der Lage sind, das Seidenpapier (10) zu entzünden, von Wärmedaten vom Seidenpapier (10) und/oder von mindestens einem Bereich der Papiermaschine durch mindestens ein Detektionsmittel (118, 208, 210); und
Analysieren der Bilddaten und der Wärmedaten vom Detektionsmittel (118, 208, 210) zum Detektieren von sichtbar beobachtbaren Strukturabweichungen (504) im Seidenpapier (10) und der Temperaturabweichungen (502), die in der Lage sind, das Seidenpapier (10) zu entzünden, am Seidenpapier und/oder in mindestens einem Bereich der Papiermaschine durch ein Verarbeitungsmittel (126, 212);
Identifizieren von Bilddaten in Reaktion auf eine Detektion der Temperaturabweichung (502), die in der Lage ist, das Seidenpapier zu entzünden, oder von Wärmedaten eines Bereichs des Seidenpapiers (10) oder mindestens eines Bereichs der Papiermaschine, wenn auf Basis eines Zeitmoments, in dem das Bild erfasst wird, und eines Zeitmoments, in dem die Wärmedaten detektiert werden, ein Bild mit einer Strukturabweichung (504) detektiert wird, durch das Verarbeitungsmittel (126, 212); und
Vergleichen der Bilddaten und der Wärmedaten und Benachrichtigen eines Benutzers über die Temperaturabweichungen (502), die in der Lage sind, das Seidenpapier zu entzünden, durch das Verarbeitungsmittel (126, 212) auf Basis des Vergleichs der Wärme- und der Bilddaten und von deren Identifikation.

15. Computerprogrammverteilungsmedium, das von einem Computer lesbar ist und ein Computerprogramm mit Anweisungen zum Ausführen eines Computerprozesses aufweist, der die Schritte gemäß Anspruch 14 umsetzt.

## Revendications

1. Système pour surveiller la production de papier-tissu (10) dans une extrémité sèche (20) d'une machine à papier, le système comprenant
au moins un moyen de détection (118, 208, 210) configuré pour former des données d'image sous forme de lumière visible à partir d'une section du papier-tissu (10) en mouvement, et pour former des données thermiques en réponse à des températures susceptibles d'enflammer le papier-tissu (10), à partir du papier-tissu (10) et/ou d'au moins une section de la machine à papier ; et
un moyen de traitement (126, 212) configuré pour analyser lesdites données d'image et données thermiques provenant du moyen de détection (118, 208, 210) pour détecter des écarts structurels (504) visiblement observables dans le papier-tissu (10) et des écarts de température (502) susceptibles d'enflammer le papier-tissu (10), à partir du papier-tissu et/ou d'au moins une section de la machine à papier ; et
le moyen de traitement (126, 212) est configuré pour identifier des données d'image en réponse à la détection desdits écarts de température (502) susceptibles d'enflammer le papier-tissu, ou des données thermiques d'une section du papier-tissu (10) ou d'au moins une section de la machine à papier en réponse à la détection d'une image avec un écart structurel (504), sur la base du moment de la capture de l'image et du moment de la détection des données thermiques ;
le moyen de traitement (126, 212) étant configuré pour comparer les données d'image et les données thermiques et informer un utilisateur des écarts de température (502) susceptibles d'enflammer le papier-tissu sur la base de la comparaison des données thermiques et des données d'image et de leur identification.

2. Système selon la revendication 1, dans lequel l'au moins un moyen de détection (118, 208, 210) est configuré pour former des données d'image sous forme de lumière visible à partir du papier-tissu (10) en mouvement, sur la base d'une illumination par un ou plusieurs éclairs de lumière, et des données thermiques sans l'illumination des éclairs entre les éclairs en réponse à des températures susceptibles d'enflammer le papier-tissu (10) à partir d'au moins l'un des éléments suivant : le papier-tissu (10), au moins une section de la machine à papier.

3. Système selon la revendication 1, dans lequel
le moyen de traitement (126, 212) est configuré pour commander un processus associé à la capture d'images sous forme de lumière visible ou à leur traitement si un écart de température (502) susceptible d'enflammer le papier-tissu (10) est détecté.

4. Système selon la revendication 3, dans lequel
le moyen de traitement (126, 212) est configuré pour commander la capture d'une image d'une section du papier-tissu (10) sous forme de lumière visible en réponse à la détection de l'écart de température (502) susceptible d'enflammer le papier-tissu (10) associé à ladite section.

5. Système selon la revendication 3, dans lequel
le moyen de traitement (126, 212) est configuré pour identifier une image d'une section du papier-tissu (10) capturée sous forme de lumière visible en réponse à la détection de l'écart de température (502) susceptible d'enflammer le papier-tissu (10) associé à ladite section.

6. Système selon la revendication 1, dans lequel
le moyen de traitement (126, 212) est configuré pour analyser et combiner les données d'image et les données thermiques pour former une représentation commune d'écarts visibles (504) et d'écarts de température (502) susceptibles d'enflammer le papier-tissu (10) pour un utilisateur de la machine à papier.

7. Système selon la revendication 6, dans lequel
le moyen de traitement (126, 212) est configuré pour indiquer dans la représentation (510), les emplacements à la fois des écarts visibles (504) et des écarts de température (502) susceptibles d'enflammer le papier-tissu (10).

8. Système selon la revendication 6, dans lequel
le moyen de traitement (126, 212) est configuré pour indiquer dans la représentation (510), qu'un certain écart est causé par un certain écart de température (502) détecté susceptible d'enflammer le papier-tissu (10) dans le cas d'un emplacement commun dans le papier-tissu (10).

9. Système selon l'une des revendications précédentes, dans lequel
le moyen de traitement (126, 212) est configuré pour synchroniser les détections par rapport au mouvement du papier-tissu (10) sur la base de marques de synchronisation (512) dans le papier-tissu (10), les marques de synchronisation (512) pouvant être détectées dans au moins une parmi une détection visible et une détection thermique.

10. Système selon la revendication 1, dans lequel
le moyen de détection (118, 208, 210) comprend au moins un détecteur thermique (408) et une ou plusieurs caméras (410), l'au moins un détecteur thermique (408) étant configuré pour recevoir un rayonnement d'une gamme infrarouge, et les une ou plusieurs caméras (410) étant configurées pour capturer des images dans la lumière visible.

11. Système selon l'une des revendications précédentes, dans lequel
le moyen de traitement (126, 212) comprend
au moins un processeur ; et
au moins une mémoire comportant un code de programme informatique,
l'au moins une mémoire, avec l'au moins un processeur et le code de programme informatique, étant configurée pour amener le moyen de traitement (126, 212) à analyser l'image et les données thermiques provenant du moyen de détection (118, 208, 210) pour détecter des écarts (504) visiblement observables dans le papier-tissu (10) et des écarts de température (502) susceptibles d'enflammer le papier-tissu (10).

12. Système selon la revendication 11, dans lequel
le code de programme informatique est configuré pour amener le moyen de traitement (126, 212) à commander un processus de capture d'images sous forme de lumière visible si une température susceptible d'enflammer le papier-tissu (10) est détectée.

13. Système selon la revendication 11, dans lequel
le code de programme informatique est configuré pour amener l'au moins un moyen de détection (118, 208, 210) à former des données d'image du papier-tissu (10) sous forme de lumière visible, et des données thermiques, à partir du papier-tissu (10) en mouvement et/ou d'au moins une section de la machine à papier.

14. Procédé pour surveiller production de papier-tissu (10) dans une extrémité sèche (20) d'une machine à papier, comprenant
la formation, par au moins un moyen de détection (118, 208, 210), de données d'image d'une section du papier-tissu (10) en mouvement sous forme de lumière visible, et de données thermiques en réponse à des températures susceptibles d'enflammer le papier-tissu (10), à partir du papier-tissu (10) et/ou d'au moins une section de la machine à papier ; et
l'analyse, par un moyen de traitement (126, 212), desdites données d'image et données thermiques provenant du moyen de détection (118, 208, 210) pour détecter des écarts structurels (504) visiblement observables dans le papier-tissu (10) et les écarts de température (502) susceptibles d'enflammer le papier-tissu (10), à partir du papier-tissu et/ou d'au moins une section de la machine à papier ;
l'identification, par le moyen de traitement (126, 212), de données d'image en réponse à la détection dudit écart de température (502) susceptible d'enflammer le papier-tissu, ou de données thermiques d'une section du papier-tissu (10) ou d'au moins une section de la machine à papier où une image avec un écart structurel (504) a été détectée sur la base du moment de la capture de l'image et du moment de la détection des données thermiques ; et
la comparaison des données d'image et des données thermiques, et l'information, par le moyen de traitement (126, 212), d'un utilisateur des écarts de température (502) susceptibles d'enflammer le papier-tissu sur la base de la comparaison des données thermiques et des données d'image et de leur identification.

15. Support de distribution de programme informatique lisible par un ordinateur et codant un programme informatique d'instructions pour exécuter un processus informatique mettant en oeuvre les étapes selon la revendication 14.
